(19) Europäisches Patentamt
European Patent Office
Office européen des brevets

(11) EP 2 661 332 B1

(12) FASCICULE DE BREVET EUROPEEN

(45) Date de publication et mention
de la délivrance du brevet:
**12.12.2018 Bulletin 2018/50**

(21) Numéro de dépôt: **11802505.5**

(22) Date de dépôt: **24.11.2011**

(51) Int Cl.:
***B22F 3/22*** *(2006.01)*     ***B22F 3/20*** *(2006.01)*
***B22F 1/00*** *(2006.01)*     ***C08K 5/01*** *(2006.01)*
***C08K 5/06*** *(2006.01)*     ***C08K 5/09*** *(2006.01)*

(86) Numéro de dépôt international:
**PCT/FR2011/052746**

(87) Numéro de publication internationale:
**WO 2012/093211 (12.07.2012 Gazette 2012/28)**

(54) **MELANGE MAITRE POUR LE MOULAGE PAR INJECTION DE POUDRE CERAMIQUE OU METALLIQUE ET METHODE POUR SA PREPARATION**

MASTERBATCH FÜR KERAMIK- ODER METALLPULVERSPRITZGIESSEN UND VERFAHREN ZUR HERSTELLUNG DIESES MASTERBATCHES

MASTER BATCH FOR CERAMIC- OR METAL-POWDER INJECTION-MOLDING, AND METHOD FOR PREPARING SAID MASTER BATCH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.01.2011 FR 1150095**

(43) Date de publication de la demande:
**13.11.2013 Bulletin 2013/46**

(73) Titulaire: **Commissariat à l'Énergie Atomique et aux Énergies Alternatives
75015 Paris (FR)**

(72) Inventeurs:
• **SERVANT, Florence**
**F-38410 Vaulnaveys Le Haut (FR)**
• **TIQUET, Pascal**
**F-38100 Grenoble (FR)**

(74) Mandataire: **Cabinet Laurent & Charras
Le Contemporain
50 Chemin de la Bruyère
69574 Dardilly Cedex (FR)**

(56) Documents cités:
**US-A- 4 721 599     US-A- 5 098 942**

• **J. A. MOLEFI ET AL: "Investigation of thermally conducting phase-change materials based on polyethylene/wax blends filled with copper particles", JOURNAL OF APPLIED POLYMER SCIENCE, 1 janvier 2010 (2010-01-01), pages NA-NA, XP55017363, ISSN: 0021-8995, DOI: 10.1002/app.31653**

## Description

### DOMAINE TECHNIQUE

La présente invention a trait à la réalisation de pièces par des techniques de moulage par injection (« *Powder Injection Molding* » ou PIM), et plus particulièrement à la préparation de mélanges-maîtres (« *feedstocks* ») utilisés pour le moulage par injection ou par extrusion.

Plus précisément, la présente invention concerne un mélange maître de composition bien déterminée, particulièrement adaptée à l'application visée, et notamment au déliantage thermique des pièces moulées.

### ETAT ANTERIEUR DE LA TECHNIQUE

La technique de moulage par injection (PIM, ou microPIM lorsqu'il s'agit de poudres ultrafines) est couramment utilisée pour la réalisation de divers objets. Le moulage par injection de poudre est un procédé à plusieurs étapes qui combine le moulage par injection des plastiques et la consolidation utilisée en métallurgie des poudres par tout type de frittage. Il permet la réalisation de composants métalliques et céramiques.

Dans un tel procédé, la première étape consiste à obtenir un mélange-maître (ou *"feedstock"*) adapté à l'application visée. Les mélanges - maîtres sont constitués d'un mélange de matière organique (ou liant polymérique) et de poudres inorganiques (métalliques ou céramiques).

Ensuite, le mélange-maître s'injecte comme un thermoplastique. Enfin, la pièce est déliantée puis frittée.

Plus précisément, les mélanges maîtres constitués de matériaux polymériques, agissant comme liant, et de poudres métalliques ou céramiques sont réalisés à chaud et injectés dans un moule. Il en résulte une pièce injectée en polymère chargé de poudre, appelée pièce « verte ». Cette pièce verte possède la même forme que la pièce finale mais de plus grandes dimensions.

Les polymères utilisés pour permettre l'injection du matériau doivent ensuite être extraits par déliantage. Les liants sont donc extraits, puis la pièce dite « brune » qui en résulte est frittée pour consolidation et densification tout en gardant, de manière homothétique, la forme de la pièce « verte ». Il en résulte des pièces céramiques et métalliques.

Il existe différentes sortes de déliantage selon la composition chimique et/ou physique des polymères utilisés: le déliantage catalytique, thermique, par solvant, à l'eau, ou par $CO_2$ supercritique.

Le déliantage catalytique consiste à placer les pièces vertes dans une atmosphère inerte et très acide (acide nitrique ou oxalique) dans un four. Les polymères utilisés dans ce cas sont à base de polyacétal (par exemple polyoxyméthylène). Des formulations adaptées pour un tel déliantage catalytique sont par exemple décrites dans le document US 5,531,958.

Le déliantage thermique est considéré comme assez simple physiquement, mais assez long (jusqu'à 60 heures). Malgré l'inconvénient du temps de déliantage, il est largement utilisé pour de nombreuses compositions (par exemple dans les documents US 5,254,613, US 5,417,756, EP 0 599 285, US 4,207,226 ou ES2167130).

Le déliantage par solvant apolaire permet d'extraire les polymères apolaires de type paraffine, cire de polyéthylène et plus généralement de faible masse moléculaire. Les solvants utilisés sont, par exemple, l'hexane, le xylène, le toluène. Ils peuvent aussi être une combinaison de plusieurs solvants (par exemple hexane, trichlorométhane et éthanol) pour enlever, en plus, les stabilisants, compatibilisants, acide stéarique et autres, qui sont largement utilisés dans les polymères.

Le déliantage est alors réalisé par extraction chimique de type Soxhlet. Ce procédé, bien qu'utilisant des produits chimiques nocifs, présente l'avantage de ne pas émettre de gaz dans l'atmosphère et de délianter les pièces par vaporisation-condensation du solvant. Ce dernier peut donc être réutilisé d'un déliantage à un autre. L'utilisation de filtres retenant les polymères extraits permet de délianter avec un solvant propre à chaque cycle.

Le déliantage chimique peut être aussi utilisé de manière complémentaire avec d'autres procédés, notamment les procédés de déliantage thermique ou de déliantage par eau, ce qui permet d'améliorer la cinétique du procédé global.

Le déliantage par extraction à l'eau présente également l'avantage de réduire l'émission de gaz dans l'environnement, issue de la dégradation thermique produite par incinération, et de réduire l'utilisation de solvants ou d'acides comportant des risques pour la santé. Les mélanges à base de polymères déliantables à l'eau sont de plus en plus utilisés, comme décrit dans les documents US 6,008,281, US 6,264,863, PT102147, US 5,098,942 ou WO 2010/058371.

Enfin, le déliantage par $CO_2$ supercritique, en voie de développement, permet d'extraire les polymères dans les feedstocks. Il consiste à délianter à faible température et sous pression de $CO_2$, de manière rapide et sans création de défauts (Chartier et al., J. Am. Ceram. Soc. 1995, 78, 1787-1792).

Une fois déliantée, la pièce appelée pièce « brune » est extrêmement fragile. Il est courant dans l'industrie de ne pas délianter totalement la pièce avant de réaliser le frittage, pour pouvoir la manipuler entre les deux étapes. Dans ce cas, un palier en température est rajouté pendant le frittage pour délianter totalement la pièce. Le frittage se déroule dans un four selon les procédés habituels de densification utilisés dans la métallurgie des poudres, à savoir un cycle thermique et une atmosphère propre à chaque matériau à fritter.

Un des principaux éléments pour la réussite d'une pièce exempte de fissures ayant la forme et les détails désirés est la composition chimique du liant utilisé dans le mélange maître. Le mélange doit être assez fluide pour être injecté et moulé, et présenter une bonne tenue mécanique pour pouvoir démouler et manipuler la pièce verte. Il est aussi important de mélanger un maximum de poudre avec le liant, c'est-à-dire avoir un taux de charges élevé. Les taux de charges varient selon la taille de la poudre et ses propriétés chimiques et/ou physiques mais sont généralement compris entre 40 et 75% en volume. Sur des matériaux qui ont des difficultés à densifier, il est important d'augmenter au maximum le taux de charges de poudre dans le mélange maître.

La plupart des composants chimiques utilisés pour réaliser des feedstocks qui se déliantent thermiquement (ou de façon hybride : thermique et par solvant, ou thermique et à l'eau) consiste en un mélange d'un ou plusieurs polymères avec de la cire de paraffine et un dispersant.

Les polymères de tenue utilisés sont des thermoplastiques semi cristallins et généralement des polyoléfines, tels que le polyéthylène (basse densité, haute densité, linéaire basse densité), le polypropylène.... Cependant, une fois mélangé à une grande quantité de poudre, le mélange n'est plus assez fluide pour être injecté et moulé.

Pour améliorer la fluidité du mélange, la paraffine (cire saturée) ou d'autres cires insaturées peuvent être insérées. La cire de paraffine présente une certaine miscibilité dans la matrice polymère avec laquelle elle est mélangée. La partie qui est miscible dans le polymère de tenue permet de fluidifier le mélange et l'autre partie de la cire s'accumule aux joints de grains et permet de lubrifier à l'échelle macroscopique la chambre de l'extrudeuse ou de la presse à injecter. I. Krupa et al. (European Polymer Journal, 43, 2007, p4695-4705) expliquent que la miscibilité de la cire dépend de la longueur de la chaine carbonée de la cire et aussi du polyéthylène choisi (LLDPE ou LDPE). Dans le but d'obtenir un mélange maître avec un taux de charges élevé tout en gardant une bonne fluidité du feedstock, il est nécessaire de mettre une grande quantité de cire dans les mélanges.

Guo et al. (Rare metals, vol 28 No3, Jun 2009, p261) utilisent des formulations à base majoritaire de paraffine. Toutefois, un taux trop élevé de paraffine, c'est-à-dire bien supérieur à sa solubilité dans les autres polymères utilisés, se traduit par des zones d'accumulation de cire aux joints de grains qui fragilise la pièce verte à l'éjection.

D'autres formulations mettent en oeuvre de la paraffine en plus faible quantité accompagnée de PEG (Poly-Ethylène Glycol), dans le but de délianter une partie de la pièce par voie aqueuse, plutôt que par voie thermique. Dans ce cas, les compositions sont réalisées avec une grande majorité de PEG de faible masse molaire (WO 2010/058371, EP 0587 953), ce qui peut néanmoins provoquer un manque de tenue de la pièce.

L'ajout de PEG, molécule de petites chaines, fournit de la mobilité aux grandes chaines du polymère LDPE, tout en préservant la cohésion du tout grâce aux liaisons hydrogène, et joue le rôle de plastifiant dans les mélanges. Il n'est que très légèrement miscible avec les composés aliphatiques et apporte une certaine élasticité au mélange.

De plus, la société Boréalis, leader mondial du polyéthylène, a décrit dans le document WO 2010/72396, une formulation, pour le domaine des câbles électriques, d'un mélange de LDPE et de PEG. Il est ainsi proposé une méthode de mélange avec des constituants chimiquement incompatibles (par exemple LDPE et PEG, ce dernier étant qualifié d'additif aqueux ou « water tree retardant »), mais avec suffisamment d'homogénéité pour garantir les propriétés attendues pour l'application, à savoir un enrobage résistant des câbles. De manière caractéristique, il est préconisé d'insérer une quantité inférieure à 50% en poids, préférentiellement inférieure à 30%, avantageusement comprise entre 1,5% et 20%, voire entre 2% et 15% de PEG de masse molaire comprise entre 4 000 g/mol et 35000 g/mol, dans le LDPE.

Le document Molefi et al. (Journal of Applied Polymer Science, 01.01.2010) décrit de matériaux à changement de phase, comprenant du LLDPE comme polymère de tenue, de la cire pour sa faible conductivité thermique, et optionnellement, en faible proportion, un métal comme le cuivre pour ses propriétés de conduction thermique.

Le document US 4,721,599 décrit un mélange-maître comprenant une poudre d'alliage métallique, des cires, du PEG, de la méthylcellulose et de l'eau.

Le document Abolhasani et al. (Journal of Materials Processing Technology, 210 (2010) 961-68) décrit un mélange maître pour moulage comprenant, comme polymère de tenue, du LLDPE (28,5% en poids) et surtout de l'amidon (41,3%), permettant un déliantage réalisé en présence d'eau proche de l'ébullition.

En tout état de cause, il existe un besoin évident de développer de nouvelles formulations de mélange-maîtres (ou « feedstocks ») pour le moulage par injection ou par extrusion, compatibles avec les procédés de déliantage disponibles, notamment thermiques.

## OBJET DE L'INVENTION

La présente invention concerne une composition de mélange-maître (ou « master batch »), utilisable pour le moulage par injection ou par extrusion, qui, après avoir été mélangée avec des poudres métalliques ou céramiques, permet la production de pièces en métal ou en céramique. Plus précisément, il est décrit un mélange maître se caractérisant par les composés suivants :

- au moins une poudre inorganique, avantageusement céramique ou métallique ;
- un mélange organique, avantageusement polymérique, comprenant :

  - un homo ou un copolymère de tenue présentant de bonnes propriétés de ductilité ;
  - un lubrifiant ;
  - un polymère plastifiant.

Concernant la poudre inorganique ou le mélange de poudres inorganiques, présents dans le mélange-maître selon l'invention, il s'agit classiquement de poudres céramiques ou métalliques.

Une poudre céramique est par exemple la poudre de zircone partiellement stabilisée à l'Yttrium. Une poudre métallique est par exemple une poudre de cuivre.

Il peut s'agir de poudres nanométriques (taille des particules inférieure à 100 nm) ou micrométriques.

Selon l'invention, la ou les poudre(s) inorganique(s) représente de 40 à 75% en volume du mélange-maître.

Le mélange organique décrit est avantageusement un mélange ternaire constitué des trois ingrédients mentionnés ci-dessus, à savoir :

  - un homo ou un copolymère de tenue présentant de bonnes propriétés de ductilité ;
  - un lubrifiant ;
  - un polymère plastifiant.

De manière privilégiée, le mélange-maître comprend en outre un dispersant. Celui-ci permet de lier la poudre aux polymères et les polymères non miscibles entre eux.

Le dispersant est avantageusement de l'acide octadécanoïque, plus communément appelé acide stéarique (de la famille des acides carboxyliques). De l'acide oléique ou de l'acide palmique peut également être utilisé.

Il présente avantageusement une densité comprise entre 0,8 et 1,01 $g/cm^3$.

La quantité du dispersant, notamment d'acide stéarique, ajouté est dépendante de la granulométrie de la poudre mais varie avantageusement entre 1 et 20 % massique du mélange organique, avantageusement constitué par les trois ingrédients mentionnés ci-dessus. En d'autres termes, pour 100% en masse du mélange organique, on ajoute 1 à 20% de dispersant.

Selon un autre mode de réalisation privilégié, le mélange organique, et avantageusement le dispersant, sont de nature polymérique.

De manière avantageuse, le mélange-maître selon l'invention ne comprend pas de solvant, notamment organique, ni d'eau.

De manière encore plus avantageuse, le mélange-maître contient, outre la poudre, uniquement les trois constituants précités du mélange organique et éventuellement le dispersant.

De manière adaptée, le polymère de tenue présente de bonnes propriétés de ductilité, à savoir une déformation à la rupture supérieure à 300%, encore plus avantageusement supérieure à 500%. En pratique et selon l'invention, il s'agit d'un polymère de type LLDPE (« Linear Low Density PolyEthylene »), à savoir un polyéthylène à basse densité linéaire.

De manière avantageuse, le LLDPE est caractérisé par une masse molaire avantageusement comprise entre 5.000 et 400.000 g/mol.

Le taux de ramification du LLDPE mis en oeuvre est avantageusement inférieur à 50 pour 1000 carbones, préférentiellement inférieur à 10 pour 1000 carbones. Ceci garantit de bonnes propriétés de ductilité, même avec un taux de charge élevé de poudre dans le mélange.

La densité du LLDPE mis en oeuvre est avantageusement comprise entre 0,88 et 0,94 $g/cm^3$, encore plus avantageusement entre 0,91 et 0,93 $g/cm^3$.

La température de fusion principale du LLDPE mis en oeuvre est avantageusement comprise entre 120°C et 160°C pour les masses molaires du LLDPE supérieures à 50.000 g/mol. Sa température de fusion secondaire est comprise entre 50°C et 90°C correspondant aux chaines courtes, de masse molaire inférieure à 8.000 g/mol.

Il est en outre souhaitable que le LLDPE utilisé contienne quelques groupements polaires qui pourraient assurer la compatibilité avec le PEG, l'acide stéarique et les cires utilisées. Ces groupements peuvent être de type carbonyles, carboxyles, esters, cétone. Ils sont typiquement au nombre de 1 à 5 groupements, tous les 100 carbones en moyenne. Les liaisons insaturées ne sont pas souhaitées et ne doivent pas dépasser 5 insaturations pour 1.000 carbones puisque celles-ci génèrent de la réticulation et donc des zones non fusibles (infondus). Cela conduit aussi à une augmentation locale de la viscosité du mélange, non souhaitée pour l'homogénéité du mélange-maître.

Selon l'invention, le lubrifiant est une cire de paraffine, de composition ($C_nH_{n+2}$) avec n variant entre 18 et 50, appelée communément « cire de paraffine» ou « cire de polyéthylène» selon la proportion de petites chaines par rapport aux grandes chaines de polyéthylène. Les cires selon l'invention contiennent des liaisons insaturées pour se greffer sur les chaînes de LLDPE et/ou de PEG. Le taux d'insaturation de la cire de paraffine et/ou de la cire de polyéthylène (basses et hautes masses molaires respectivement) doit être supérieur à 10%, préférentiellement 50%. Les mélanges de ces derniers, possédant une température de fusion comprise entre 30 et 90°C, une masse molaire entre 200 et 1.500 g/mol et une densité comprise entre 0,5 et 0,99 g/cm$^3$, avantageusement entre 0,7 et 0,8 g/cm$^3$ sont préconisés dans l'élaboration du mélange-maître selon l'invention.

La présence de cire de paraffine est importante pour assurer la lubrification de la presse à injecter et pour abaisser la viscosité du mélange grâce à la présence de chaines courtes. Un taux de paraffine élevé permet d'incorporer une plus grande quantité de poudre. Cependant, la quantité de cire de paraffine ne doit pas être trop importante pour ne pas fragiliser les pièces vertes au sortir de l'injection, qui serait systématiquement cassée lors de l'éjection.

Avantageusement, le polymère plastifiant est du PEG (polyéthylène glycol), ou éventuellement du POE (Polyoxyéthylène) ou du carbonate d'éthylène.

Un Polyéthylène Glycol mis en oeuvre dans le cadre de la présente invention est avantageusement caractérisé par une masse molaire comprise entre 1.000 à 100.000 g/mol, encore plus avantageusement entre 15.000 et 45.000 g/mol. Il est en effet préférable d'utiliser un PEG qui a une haute masse molaire (par exemple 20.000) puisque les températures de mélange sont élevées et les PEG à masse molaire élevée se dégradent moins vite à haute température que les PEG à masse moléculaire faible ou les carbonates d'éthylène.

Le PEG mis en oeuvre se caractérise également par une densité avantageusement comprise entre 1,1 à 1,4 g/cm$^3$ et une température de fusion avantageusement comprise entre 15 et 70°C.

De manière caractéristique selon l'invention, le polymère de tenue est présent en proportion massique majoritaire par rapport au lubrifiant et au polymère plastifiant. En d'autres termes et de manière avantageuse, la masse de polymère de tenue est supérieure ou égale à celle du lubrifiant, voire à celle du plastifiant.

En pratique, il est décrit un mélange organique représentant 100% massique qui comprend:

- un polymère de tenue présentant de bonnes propriétés de ductilité, avantageusement un LLDPE, à hauteur de 30 à 90% en poids du mélange organique ;
- un lubrifiant, à hauteur de 5 à 50 %, voire de 5 à 40%, voire même de 10 à 40% en poids du mélange organique ;
- un polymère plastifiant, à hauteur de 5 à 30% en poids du mélange organique ; avec un rapport [% en poids du lubrifiant] / [% en poids du polymère de tenue] inférieur ou égal ($\leq$) à 1, avantageusement strictement inférieur (<) à 1.

De manière encore plus avantageuse, le mélange organique décrit comprend :

- un polymère de tenue présentant de bonnes propriétés de ductilité, avantageusement un LLDPE, à hauteur de 40 à 90% en poids du mélange organique ;
- un lubrifiant, à hauteur de 5 à 40 % voire de 10 à 40% en poids du mélange organique ;
- un polymère plastifiant, à hauteur de 5 à 30% en poids du mélange organique ; avec un rapport [% en poids du lubrifiant] / [% en poids du polymère de tenue] inférieur ou égal ($\leq$) à 1, avantageusement strictement inférieur (<) à 1.

Selon un mode de réalisation privilégié, les proportions massiques de ces trois polymères dans le mélange organique décrit sont comme suit :

- 30 à 90%, avantageusement 40 à 90% en poids de LLDPE ;
- 5 à 50 %, avantageusement 5 à 40 %, encore plus avantageusement 10 à 40% en poids de cire de paraffine (PW) ; et
- 5 à 30% en poids de PEG.

Par ailleurs, le ratio [% massique PW] / [% massique LLDPE] est avantageusement inférieur ou égale à 1, encore plus avantageusement inférieur à 1.

En d'autres termes, il convient de mettre dans la formulation une masse de LLDPE au moins égale à la masse de cire de paraffine, avec une quantité faible de PEG.

En effet, le PEG est ajouté non pas pour favoriser le déliantage aqueux, bien qu'il puisse être utilisé à cet effet, mais pour apporter de l'élasticité au mélange grâce à ses chaines courtes et à sa polarité qui le rend peu soluble dans le LLDPE. Il est donc apporté en faible quantité (5 à 30% en poids du mélange organique).

La présente invention vise donc un mélange-maître pour moulage comprenant :

- au moins une poudre inorganique, avantageusement céramique ou métallique, représentant de 40 à 75% en volume du mélange-maître ;
- un mélange organique, avantageusement polymérique, comprenant, pour un mélange organique représentant 100% massique :

- un LLDPE comme polymère de tenue présentant de bonnes propriétés de ductilité, à hauteur de 30 à 90% en poids du mélange organique ;
- une cire de paraffine contenant des liaisons insaturées comme lubrifiant, à hauteur de 5 à 50 % en poids du mélange organique ;
- un polymère plastifiant, à hauteur de 5 à 30% en poids du mélange organique ;

avec le rapport [% en poids de la cire de paraffine] / [% en poids de LLDPE] inférieur ou égal à 1, avantageusement strictement inférieur à 1.

Selon un mode de réalisation particulier de l'invention, le mélange organique comprend :

- un LLDPE comme polymère de tenue présentant de bonnes propriétés de ductilité, à hauteur de 40 à 90% en poids du mélange organique ;
- une cire de paraffine contenant des liaisons insaturées comme lubrifiant, à hauteur de 5 à 40 %, voire de 10 à 40% en poids du mélange organique ;
- un polymère plastifiant, à hauteur de 5 à 30% en poids du mélange organique.

Comme déjà dit, un tel mélange-maître est avantageusement utilisé pour la réalisation d'une pièce notamment céramique ou métallique, moulée par extrusion ou injection. Il s' agit avantageusement d'injection thermoplastique puisque selon un mode de réalisation privilégié, le mélange-maître selon l'invention ne contient ni solvant notamment organique ni eau.

Selon un autre aspect, la présente invention concerne également un procédé de réalisation d'une pièce moulée qui comprend les étapes suivantes :

- préparation d'un mélange-maître selon l'invention;
- injection dudit mélange dans un moule pour former la pièce ;
- déliantage de la pièce ;
- frittage de la pièce.

Des modes de réalisation privilégiés sont les suivants :

- la préparation du mélange-maître est réalisée dans un mélangeur ou une extrudeuse, avantageusement sous flux de gaz inerte ;
- le mélange-maître est broyé avant son injection ;
- le déliantage est un déliantage thermique, avantageusement réalisé à une température comprise entre 0 et 500°C, encore plus avantageusement par paliers de température ;
- si la poudre inorganique est une poudre céramique, alors le déliantage est réalisé sous air ;
- si la poudre inorganique est une poudre métallique, alors le déliantage est réalisé sous atmosphère neutre ou sous vide.

En pratique, la préparation des mélanges selon l'invention est menée à bien dans une enceinte chauffée à la température de fusion du polymère de tenue, avantageusement du LLDPE, qui est brassée par un ou plusieurs rotors horizontaux. Les rotors doivent être capables de produire un flux turbulent dans le mélange.

Le mélange peut se réaliser par exemple dans un mélangeur ou dans une extrudeuse.

Plus précisément, ce mélange se réalise en trois étapes :

1/ intégration de tous les éléments dans l'enceinte à chaud ;
2/ mélange des constituants à température constante ;
3/ refroidissement du mélange.

La mise en oeuvre se fait préférentiellement sous un flux de gaz inerte, tel que Ar, pour éviter l'oxydation via les liaisons insaturées du polymère.

Si le mélange est réalisé dans un mélangeur à rotors horizontaux, le mode de réalisation détaillé est le suivant:

1/ l'enceinte est chauffée à la température de fusion du LLDPE: Ce dernier est inséré dans l'enceinte à la température de fusion avec le PEG. Une partie de la cire de paraffine est ensuite ajoutée (environ 30% en poids de la masse prévue de cire de paraffine).
2/ phase d'intégration de la poudre: la poudre est mélangée au préalable avec l'acide stéarique et ce mélange est inséré progressivement aux polymères pendant le mélangeage, chaque fois que le couple se stabilise. La cire de paraffine est ajoutée petit à petit pendant les ajouts de poudre. La totalité de la cire de paraffine est mise avant la fin des ajouts de poudre.

3/ A la fin des ajouts de la poudre et lorsque le couple des rotors est stabilisé, le mélange est refroidi et extrait de la chambre.

4/ Le mélange est ensuite broyé et est prêt à être injecté.

Ce mélange peut aussi être réalisé dans une extrudeuse avec un ou plusieurs passages successifs selon le mode opératoire suivant:

1/ La totalité des polymères et une partie de la poudre (avantageusement 50 à 75 % en poids de la masse totale de poudre) sont insérés dans un ou plusieurs doseurs.

2/ Premier passage à l'extrudeuse et obtention d'un mélange maître faiblement chargé en poudre.

3/ Broyage du mélange maître dans un broyeur en granulés.

4/ Insertion des granulés issus du premier passage et du reste de la poudre dans un ou plusieurs doseurs.

5/ Deuxième passage à l'extrudeuse avec la totalité des composants (polymères et poudre)

6/ Broyage du mélange maître résultant qui est totalement chargé.

7/ Réalisation d'un troisième passage pour homogénéiser le mélange maître.

8/ Broyage du mélange obtenu en granulé pour l'injection.

La vis de l'extrudeuse tourne à une vitesse de l'ordre de 150 tr/min.

Une fois le mélange maître réalisé, il est injecté dans une presse à injecter et moulé. Les pièces qui en résultent sont ensuite déliantées thermiquement (et/ou par solvant et/ou voie aqueuse) puis frittées.

Les températures de déliantage sont comprises entre 0 et 500°C et les rampes en température sont très lentes pour éviter l'apparition de fissures (entre 5 et 150 °C/h, préférentiellement 12°C/h). Le déliantage est réalisé plus généralement sous air pour les céramiques et sous atmosphère neutre ou sous vide pour les métaux oxydables.

Il est possible de connaître les températures de déliantage qu'il faut utiliser pour délianter au mieux l'échantillon par des mesures d'analyses thermo-gravimétriques (ATG), utilisant une thermo-balance.

La mesure de la perte de masse du mélange maître en fonction de la température permet de connaitre les températures de dégradation des polymères utilisés, en l'occurrence proche de 450°C - 500°C pour le LLDPE et plus diffus (entre 100°C et 450°C) pour la cire de paraffine, le PEG et l'acide stéarique, puisque ces trois éléments ont des températures de dégradation proches.

Ces températures de dégradation dépendent de la cinétique de déliantage et de l'atmosphère utilisée.

Le frittage est quant à lui dépendant de la poudre utilisée, et correspond aux cycles de température déterminés sur la poudre de départ, et telles qu'utilisés dans la métallurgie des poudres classiques.

## EXEMPLES DE REALISATION

Les exemples de réalisation qui suivent ont pour but d'illustrer l'invention mais ne sont en aucun cas limitatifs.

### 1/ Composition des mélange-maîtres :

Exemple 1 :

La poudre utilisée est une poudre de zircone partiellement stabilisée à l'Yttrium (5% massique) atomisée en sphères de quelques dizaines de microns avec des cristallites de taille moyenne de 36 nm (Tosoh Corporation).

Elle est mélangée avec du LLDPE, de la cire de paraffine, du PEG 20.000 et de l'acide stéarique, dans les proportions suivantes:

- 49% poids de LLDPE ;
- 29% poids de PEG 20 000 ;
- 22% poids de PW (cire de polyéthylène) ;

soit 100% massique.

De l'acide stéarique (AS) est ajouté à hauteur de 7,8% massique du total du mélange ternaire (LLDPE +PEG +PW).

$$\text{Soit masse AS} = 0.078*(mLLDPE+mPEG+mPW).$$

Le mélange est ici chargé en poudre à hauteur de 53% volumique du volume total du mélange maître (Vtotal = poudre + AS + LLDPE + PEG + PW).

$$\text{Soit Vpoudre} = 0{,}53*\text{Vtotal}$$

et Vfraction polymérique (AS + LLDPE + PEG + PW) = 0,47*Vtotal.

Exemple 2:

Un mélange est réalisé avec de la poudre de cuivre de morphologie arrondie de granulométrie 12 $\mu$m (d50) avec du LLDPE, de la cire de polyéthylène (PW), du PEG 20.000 et de l'acide stéarique, dans les proportions suivantes:

- 55% poids de LLDPE ;
- 17% poids de PEG 20 000 ; et
- 28% poids de PW

soit 100% massique.

De l'acide stéarique (AS) est ajouté à hauteur de 7,8% massique du total du mélange ternaire (LLDPE +PEG +PW).

Le mélange est ici chargé en poudre à 60% volumique.

Dans ces deux exemples, les polymères utilisés ont les spécifications suivantes:

- LLDPE: EXXO MOBIL ; densité =0,921 g/cm$^3$ ; température de fusion primaire = 60°C ; température de fusion secondaire = 130°C.
- PW (cire de polyéthylène): SER 70H ; densité = 0,77 g/cm$^3$ ; température de fusion = 73°C.
- AS (acide stéarique): Sigma Aldrich; densité = 0,845 g/cm$^3$;
- PEG 20 000 (polyéthylène glycol 20 000 g/mol) : densité = 1,2 g/cm$^3$.

### 2/ *Fabrication des pièces :*

Les mélanges sont réalisés dans une extrudeuse avec le mode opératoire décrit ci-dessus.

Le déliantage de la zircone est réalisée thermiquement sous air, par thermo-oxydation à 12°C/h jusqu'à 300 °C avec un palier de 3h à cette température, puis à 12°C/h jusqu'à 400°C, avec un palier 1h à cette température.

Le frittage est réalisé à 300°C/h jusqu'à 1500°C pendant 5h.

Le déliantage du cuivre est réalisé sous atmosphère neutre (Argon ou Azote) jusqu'à 500°C à 12°C/h avec un palier de 4h.

Le frittage est réalisé sous atmosphère réductrice, ArH$_2$ ou H$_2$ pur ou encore sous vide, par exemple pendant 2h à 900°C avec une rampe de 300°C/h, ainsi qu'un palier à basse température pour désoxyder le cuivre, typiquement 200-400°C.

**Revendications**

1. Mélange-maître pour moulage comprenant :

   • au moins une poudre inorganique, avantageusement céramique ou métallique, représentant de 40 à 75% en volume du mélange-maître ;
   • un mélange organique, avantageusement polymérique, comprenant, pour un mélange organique représentant 100% massique :

      - un LLDPE comme polymère de tenue présentant de bonnes propriétés de ductilité, à hauteur de 30 à 90% en poids du mélange organique ;
      - une cire de paraffine contenant des liaisons insaturées comme lubrifiant, à hauteur de 5 à 50 % en poids du mélange organique ;

- un polymère plastifiant, à hauteur de 5 à 30% en poids du mélange organique ; avec le rapport [% en poids de la cire de paraffine] / [% en poids de LLDPE] inférieur ou égal à 1, avantageusement strictement inférieur à 1.

2.  Mélange-maître selon la revendication 1, *caractérisé* **en ce que** le mélange organique comprend :

    - un LLDPE comme polymère de tenue présentant de bonnes propriétés de ductilité, à hauteur de 40 à 90% en poids du mélange organique ;
    - une cire de paraffine contenant des liaisons insaturées comme lubrifiant, à hauteur de 5 à 40 %, voire de 10 à 40% en poids du mélange organique ;
    - un polymère plastifiant, à hauteur de 5 à 30% en poids du mélange organique.

3.  Mélange-maître selon la revendication 1 ou 2, *caractérisé* **en ce qu'**il ne contient ni solvant ni eau.

4.  Mélange-maître selon l'une des revendications précédentes, *caractérisé* **en ce que** le polymère plastifiant est du PEG.

5.  Mélange-maître selon l'une des revendications précédentes, *caractérisé* **en ce qu'**il contient en outre un dispersant, avantageusement de l'acide stéarique.

6.  Mélange-maître selon la revendication 5, *caractérisé* **en ce que** le dispersant est ajouté à hauteur de 1 à 20 % en poids du mélange organique.

7.  Utilisation d'un mélange-maître selon l'une des revendications 1 à 6 pour la réalisation d'une pièce moulée par extrusion ou injection, avantageusement par injection thermoplastique.

8.  Procédé de réalisation d'une pièce moulée comprenant les étapes suivantes :

    - préparation d'un mélange-maître selon l'une des revendications 1 à 6 ;
    - injection dudit mélange dans un moule pour former la pièce ;
    - déliantage de la pièce ;
    - frittage de la pièce.

9.  Procédé de réalisation d'une pièce selon la revendication 8, *caractérisé* **en ce que** la préparation du mélange-maître est réalisée dans un mélangeur ou une extrudeuse, avantageusement sous flux de gaz inerte.

10. Procédé de réalisation d'une pièce selon la revendication 8 ou 9, *caractérisé* **en ce que** le mélange-maître est broyé avant son injection.

11. Procédé de réalisation d'une pièce selon l'une des revendications 8 à 10 *caractérisé* **en ce que** le déliantage est un déliantage thermique.

**Patentansprüche**

1.  Masterbatch zur Formgebung, umfassend:

    * mindestens ein anorganisches Pulver, vorzugsweise keramisch oder metallisch, das 40 bis 75 Vol.-% des Masterbatches ausmacht;
    * eine organische Mischung, vorzugsweise polymerisch, umfassend, für eine organische Mischung, die 100 Gew.-% darstellt:

        - ein LLDPE als Haltepolymer mit guten Duktilitätseigenschaften, von 30 bis 90 Gew.-% der organischen Mischung;
        - ein Paraffinwachs, das ungesättigte Bindungen als Gleitmittel enthält, von 5 bis 50 Gew.-% der organischen Mischung;
        - ein plastifizierendes Polymer, von 5 bis 30 Gew.-% der organischen Mischung; mit dem Verhältnis [Gew.-% Paraffinwachs] / [Gew.-% LLDPE] kleiner oder gleich 1, vorteilhafterweise strikt kleiner als 1.

**2.** Masterbatch nach Anspruch 1, **dadurch gekennzeichnet, dass** die organische Mischung folgendes umfasst:

- ein LLDPE als Haltepolymer mit guten Duktilitätseigenschaften, von 40 bis 90 Gew.-% der organischen Mischung;
- ein Paraffinwachs, das ungesättigte Bindungen als Gleitmittel enthält, von 5 bis 40 Gew.-% oder sogar 10 bis 40 Gew.-% der organischen Mischung;
- ein plastifizierendes Polymer, von 5 bis 30 Gew.-% der organischen Mischung.

**3.** Masterbatch nach Anspruch 1 oder 2, **dadurch gekennzeichnet, dass** er weder Lösungsmittel noch Wasser enthält.

**4.** Masterbatch nach einem der vorstehenden Ansprüche, **dadurch gekennzeichnet, dass** das plastifizierende Polymer PEG ist.

**5.** Masterbatch nach einem der vorstehenden Ansprüche, **dadurch gekennzeichnet, dass** es auch ein Dispersionsmittel, vorzugsweise Stearinsäure, enthält.

**6.** Masterbatch nach Anspruch 5, **dadurch gekennzeichnet, dass** das Dispersionsmittel in einer Menge von 1 bis 20 Gew.-% der organischen Mischung zugegeben wird.

**7.** Verwendung eines Masterbatch nach einem der Ansprüche 1 bis 6 zur Herstellung eines durch Extrusion oder Spritzguss, vorzugsweise durch thermoplastischen Spritzguss geformten Teils.

**8.** Verfahren zur Herstellung eines Formteils, umfassend die folgenden Schritte:

- Herstellen eines Masterbatches nach einem der Ansprüche 1 bis 6;
- Einspritzen der Mischung in eine Form, um das Teil zu bilden;
- Lösen des Teils;
- Sinterung des Teils.

**9.** Verfahren zur Herstellung eines Teils nach Anspruch 8, **dadurch gekennzeichnet, dass** die Herstellung des Masterbatches in einem Mischer oder Extruder, vorzugsweise unter Inertgasstrom, durchgeführt wird.

**10.** Verfahren zur Herstellung eines Teils nach Anspruch 8 oder 9, **dadurch gekennzeichnet, dass** der Masterbatch vor dem Einspritzen gemahlen wird.

**11.** Verfahren zur Herstellung eines Teils nach einem der Ansprüche 8 bis 10, **dadurch gekennzeichnet, dass** die Entbinderung eine thermische Entbinderung ist.

**Claims**

**1.** A master batch for molding, comprising:

• at least one inorganic powder, advantageously ceramic or metallic, ranging between 40 and 75% by volume of the master batch;
• an organic mixture, advantageously polymer, comprising for an organic mixture of 100% by mass:

- a LLPDE as a stable polymer having good ductility features, from 30 to 90% by mass of the organic mixture;
- a paraffin wax containing unsaturated bonds as lubricant, from 5 to 50 % by mass of the organic mixture;
- a plasticizing polymer, from 5 to 30% by mass of the organic mixture; with a [% by mass of the paraffin wax] / [% by mass of LLPDE] ratio smaller than or equal to 1, advantageously strictly smaller than 1.

**2.** The master batch of claim 1, *characterized* in that the organic mixture comprises:

- a LLDPE as a stable polymer having good ductility features, from 40 to 90% by mass of the organic mixture;
- a paraffin wax containing unsaturated bonds as lubricant, from 5 to 40 %, or even from 10 to 40% by mass of the organic mixture;
- a plasticizing polymer, from 5 to 30% by mass of the organic mixture.

3. The master batch of claim 1 or 2, *characterized* **in that** it contains neither solvent nor water.

4. The master batch of any of the foregoing claims, *characterized* **in that** the plasticizing polymer is PEG.

5. The master batch of any of the foregoing claims, *characterized* **in that** it further contains a dispersing agent, advantageously stearic acid.

6. The master batch of claim 5, *characterized* **in that** the dispersing agent is added up to from 1 to 20% by mass of the organic mixture.

7. A use of the master batch of any of claims 1 to 6 to form an extrusion or injection molded part, advantageously by thermoplastic injection.

8. A method for manufacturing a molded part comprising the steps of:

- preparing the master batch of any of claims 1 to 6;
- injecting said mixture into a mold to form the part;
- debinding the part;
- sintering the part.

9. The method for forming the part of claim 8, *characterized* **in that** the master batch is prepared in a mixer or in an extruder, advantageously, under an inert gas flow.

10. The method for forming a part of claim 8 or 9, *characterized* **in that** the master batch is milled before its injection.

11. The method for forming a part of any of claims 8 to 10, *characterized* **in that** the debinding is a thermal debinding.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5531958 A
- US 5254613 A
- US 5417756 A
- EP 0599285 A
- US 4207226 A
- ES 2167130
- US 6008281 A
- US 6264863 B
- PT 102147
- US 5098942 A
- WO 2010058371 A
- EP 0587953 A
- WO 201072396 A
- US 4721599 A

**Littérature non-brevet citée dans la description**

- **CHARTIER et al.** *J. Am. Ceram. Soc.,* 1995, vol. 78, 1787-1792
- **I. KRUPA et al.** *European Polymer Journal,* 2007, vol. 43, 4695-4705
- **GUO et al.** *Rare metals,* Juin 2009, vol. 28 (3), 261
- **MOLEFI et al.** *Journal of Applied Polymer Science,* 01 Janvier 2010
- **ABOLHASANI et al.** *Journal of Materials Processing Technology,* 2010, vol. 210, 961-68